# EUROPEAN PATENT APPLICATION

(11) **EP 1 587 249 A1**
(43) Date of publication of application: **19.10.2005**
(21) Application number: 03815450.6
(22) Date of filing: 24.01.2003
(51) Int. Cl.: H04L 12/28, H04L 12/56, H04Q 7/34

(54) **LOCATION MANAGEMENT PROGRAM, COMPUTER PROGRAM, AND RECORDING MEDIUM**

(71) Applicant: FUJITSU LIMITED, Kawasaki-shi, Kanagawa 211-8588 (JP)
(72) Inventor: KAWAI, Morihisa, c/o FUJITSU LIMITED, Kawasaki-shi, Kanagawa 211-8588 (JP); CHIKUMA, Satoru, c/o FUJITSU LIMITED, Kawasaki-shi, Kanagawa 211-8588 (JP); TAKEKAWA, Ikuo, c/o FUJITSU LIMITED, Kawasaki-shi, Kanagawa 211-8588 (JP); ONISHI, Teruhiko, c/o FUJITSU LIMITED, Kawasaki-shi, Kanagawa 211-8588 (JP); SAITO, Takeshi, c/o FUJITSU LIMITED, Kawasaki-shi, Kanagawa 211-8588 (JP)
(74) Representative: Stebbing, Timothy Charles
(86) International application number: PCT/JP2003/000692
(87) International publication number: WO 2004/066558

(57) **Abstract**

A technique is provided to facilitate the management and notification of visited location names indicating to which network each mobile terminal currently belongs. A reception means (11) receives address information of a connection network (30), (40), or (50) that a mobile terminal (20a) is currently visiting. A location identification means (12) identifies a visited location name of the mobile terminal (20a) with reference to the received address information, as well as to a visited location name table (12a) that stores the address information in association with the visited location name. Based on the identified visited location name, a location management table creation means (13) creates a location management table (13a) for managing the location of the mobile terminal (20a). In response to a location data request asking for the location of the mobile terminal (20a), a notification means (14) consults the location management table (13a) and thus sends the visited location name.

## Description

### Technical Field

The present invention relates to a location management program and a computer program, as well as a computer-readable medium storing them, for managing locations of data terminal devices. More particularly, the present invention relates to a location management program and a computer program for managing locations of mobile data terminal devices that roam across different networks. The present invention also relates to a computer-readable medium storing those programs.

### Background Art

In recent years, an increasing number of mobile data terminal devices (hereafter, "mobile terminals") are made available in the market from various hardware vendors. Such devices include cellular telephones, personal handy phone system (PHS) terminals, and notebook computers and personal digital/data assistants (PDA) with wireless local-area network (LAN) access capabilities.

The proliferation of such mobile terminals leads to a demand for location management services that keep track of the current location of each mobile terminal in, for example, an enterprise network.

Some conventional mobile terminals are designed to obtain location data including longitude, latitude, altitude, and/or address, by using carrier services in conjunction with the global positioning system (GPS) or cellular/PHS phone services.

Another proposed method manages the location of a mobile terminal by using geographic information that is previously defined and held in each LAN segment to be visited by mobile terminals. Such information includes building names, floor numbers, and room numbers, and each mobile terminal receives this information from the visited LAN segment and sends it to another computer for location management purposes. See, for example, Japanese Patent Application Publication No. 8-314840 (1996), paragraphs 0049 to 0052 and Figure 13.

However, the earlier mentioned conventional mobile terminals require an additional device such as GPS sensors and cellular/PHS phones to identify their own locations. Besides giving inconvenience to the users, this requirement for extra equipment results in an increased cost. Also, GPS position data is insufficient to determine to which part of an enterprise-wide network (e.g., which building in the company, or which floor or room in a particular building) each mobile terminal currently belongs.

While the second-mentioned method provides geographic data in LAN segments, it is inconvenient to configure each LAN segment with such data.

### Disclosure of the Invention

In view of the foregoing, it is an object of the present invention to provide a location management program and a computer program, as well as a computer-readable medium storing those programs, that facilitate the management and notification of a visited location name indicating to which network each mobile terminal currently belongs.

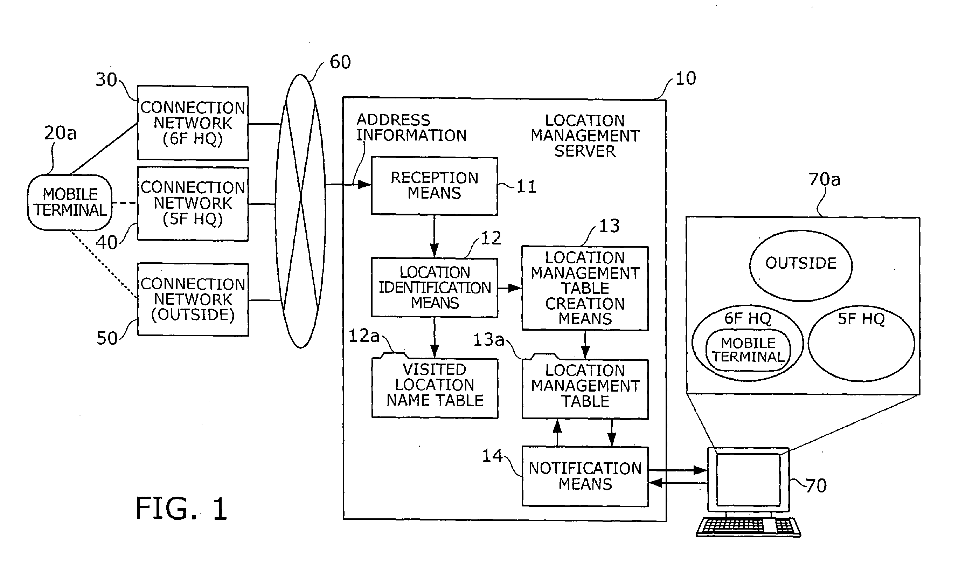

To accomplish the above objects, the present invention provides a location management program for managing the location of a mobile terminal 20a. As FIG. 1 shows, this program causes a computer to function as the following elements: a reception means 11 for receiving, from the mobile terminal 20a, address information of a connection network 30, 40, or 50 which the mobile terminal is currently visiting; a location identification means 12 for identifying a visited location name of the mobile terminal 20a with reference to the received address information and a visited location name table 12a that stores the address information in association with the visited location name; and a notification means 14, responsive to a location data request asking for the location of the mobile terminal 20a, for sending the visited location name identified by the location identification means 12.

In operation, the reception means 11 receives from a mobile terminal 20a address information of a connection network 30, 40, or 50 that the mobile terminal 20a is currently visiting. The location identification means 12 identifies a visited location name of the mobile terminal 20a with reference to the received address information and a visited location name table 12a that stores the address information in association with the visited location name. In response to a location data request asking for the location of the mobile terminal 20a, the notification means 14 sends the visited location name identified by the location identification means 12.

The above and other objects, features and advantages of the present invention will become apparent from the following description when taken in conjunction with the accompanying drawings which illustrate preferred embodiments of the present invention by way of example.

### Brief Description of the Drawings

FIG. 1 is a conceptual view showing the principle of the present invention.
FIG. 2 is a block diagram explaining a first embodiment of the present invention.
FIG. 3 is an example hardware configuration of a location management server.
FIG. 4 is a communication sequence diagram showing how the first embodiment works.
FIG. 5 shows an example of a visited location name table.
FIG. 6 shows an example of a location management table.
FIG. 7 is a flowchart of a process executed in a location management server.
FIG. 8 is a flowchart of a process executed in a mobile terminal.
FIG. 9 is an example of a terminal management table managed by a mobile terminal.
FIG. 10 is a flowchart of a process executed in a display terminal.
FIG. 11 is a block diagram explaining a second embodiment of the present invention.
FIG. 12 shows an example of a terminal management table that a mobile terminal maintains.
FIG. 13 is a communication sequence diagram showing how the second embodiment works.
FIG. 14 shows an example of a management table in a home agent.
FIG. 15 is a flowchart of a process executed in a location management server.
FIG. 16 is a flowchart of a process executed in a mobile terminal.
FIG. 17 is a flowchart of a process executed in a home agent.

### Best Mode for Carrying Out the Invention

Preferred embodiments of the present invention will be described below with reference to the accompanying drawings.

FIG. 1 is a conceptual view showing the principle of the present invention.

The illustrated location management server 10 comprises a reception means 11, a location identification means 12, a location management table creation means 13, and a notification means 14. The reception means 11 receives, from a mobile terminal 20a via a network 60, address information of a connection network 30, 40, or 50 that the mobile terminal 20a is currently visiting. The location identification means 12 identifies a visited location name of the mobile terminal 20a with reference to the received address information, as well as to a visited location name table 12a that stores each address information and a corresponding visited location name (e.g., "6F HQ," "OUTSIDE," "MEETING ROOM #1") in an associated manner. The location management table creation means 13 creates a location management table 13a for managing the location of the mobile terminal 20a, based on the identified visited location name. The notification means 14 retrieves and sends the visited location name of the mobile terminal 20a or its history records by consulting the location management table, in response to a location data request asking for that information.

Referring to FIG. 1, a mobile terminal 20a is currently visiting one of the connection networks 30, 40, and 50. This mobile terminal 20a receives address information of that visited connection network 30, 40, or 50, in addition to an IP address assigned to the mobile terminal 20a. This information reception occurs on several occasions including: when the mobile terminal 20a is powered up, when it has moved to a different subnet, when it has switched its communications media, and when the user has explicitly requested a connection to a particular network. The term "address information" means, for example, the IP address of a default gateway belonging to the visited connection network 30, 40, or 50, or the MAC address of a wireless LAN access point in that network. Upon receipt of address information, the mobile terminal 20a sends the received information to the location management server 10.

Inside the location management server 10, the reception means 11 receives the address information and passes it to the location identification means 12. From the received address information and the visited location name table 12a, the location identification means 12 identifies the visited location name of the mobile terminal 20a. Suppose, for example, that the visited location name table 12a has an entry of a visited location name "6F HQ" (sixth floor, headquarters) associated with the informed default gateway IP address of the connection network 30. This table entry permits the location identification means 12 to know that the mobile terminal 20a is currently visiting the sixth floor of the headquarters building. Based on the visited location name identified in this way, the location management table creation means 13 produces a location management table 13a for managing the location of the mobile terminal 20a.

The location management server 10 is equipped with a display terminal device (hereafter "display terminal") 70. A location data request is submitted from this display terminal 70 to the location management server 10, which asks for the visited location name of the mobile terminal 20a or its history records. Upon receipt of the location data request, the notification means 14 consults the location management table 13a to find the requested information, and the result is sent back to the display terminal 70. The display terminal 70 displays the received information on its screen 70a, as illustrated in FIG. 1, to indicate that the mobile terminal 20a currently resides in "6F HQ", i.e., the sixth floor of the headquarters building.

As can be seen from the above, the mobile terminal 20a sends address information of the currently visited connection network 30, 40, or 50 to the location management server 10. Based on this address information, the location management server 10 identifies and manages the location of the mobile terminal 20a. When requested from an external entity, the location management server 10 provides the information about where the mobile terminal 20a currently is, thus aiding the requesting entity to locate the mobile terminal 20a in, for example, an enterprise network.

The following will describe in detail how the present invention can be embodied.

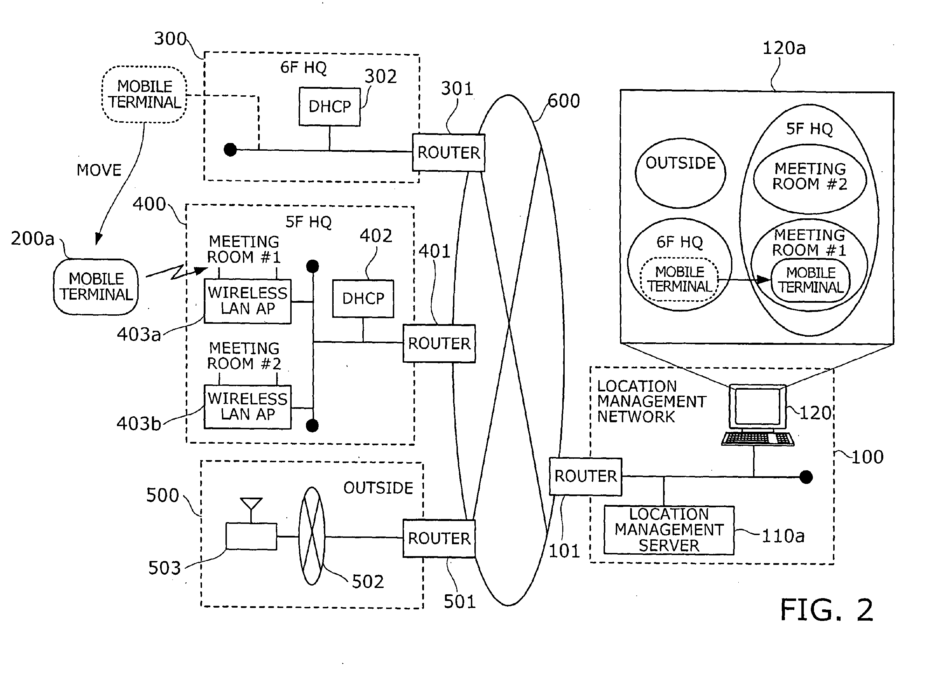

FIG. 2 is a block diagram explaining a first embodiment of the present invention.

This diagram shows a system where a location management network 100 is connected to an enterprise-scale wide area network 600. Also connected to the wide area network 600 are connection networks 300, 400, and 500, to either of which a mobile terminal 200a can be attached.

The location management network 100 is formed from a router 101 for connection to the wide area network 600, a location management server 110a, and a display terminal 120 for displaying the location of the mobile terminal 200a.

The mobile terminal 200a can be equipped with a plurality of different communication interfaces and has the function of detecting whether each communication interface is active or inactive. The mobile terminal 200a can also obtain the default gateway IP address of its visited connection network 300, 400, or 500, as well as a MAC address of a wireless LAN access point in the case it tries to access that network through a wireless LAN connection.

The connection network 300 is formed only from wired LAN facilities, including a router 301 that works as its default gateway. Also included is a Dynamic Host Configuration Protocol (DHCP) server 302, which assigns an IP address to the mobile terminal 200a. The connection network 400 provides two wireless LAN access points 403a and 403b, in addition to a router 401 and a DHCP server 402. The connection network 500 is for remote access through a dial-up connection using cellular phones or other devices. This connection network 500 is formed from a router 501, a telephone network 502, and a base station 503. The router 501 has the function of assigning an IP address to the mobile terminal 200a with the Point-to-Point Protocol (PPP).

Those connection networks 300, 400, and 500 are deployed in predetermined areas as part of an enterprise network. In the example of FIG. 2, two connection networks 300 and 400 cover the sixth floor and fifth floor of the headquarters building ("6F HQ" and "5F HQ"), respectively, while the other connection network 500 covers an area outside the company ("OUTSIDE"). Further, the connection network 400 in this example provides two wireless LAN access points (AP) 403a and 403b in the first meeting room ("MEETING ROOM #1") and second meeting room ("MEETING ROOM #2"), respectively.

The connection networks 300, 400, and 500 are further linked to a wide area network 600 via their corresponding routers 301, 401, and 501. Each connection network 300, 400, and 500 constitutes a single subnet. They are also capable of delivering IP addresses of the routers 301, 401, and 501.

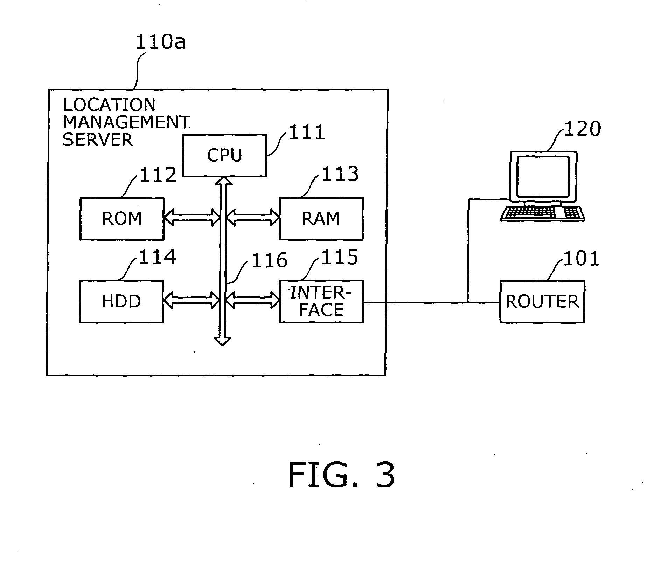

FIG. 3 is an example hardware configuration of a location management server.

This location management server 110a is implemented on, for example, a personal computer (PC) composed of a central processing unit (CPU) 111, a read-only memory (ROM) 112, a random access memory (RAM) 113, a hard disk drive (HDD) 114, an interface 115, a bus 116, and other (not shown) components.

The CPU 111 controls various parts of the illustrated device according to programs stored in the HDD 114.

The ROM 112 stores basic programs and data that the CPU 111 executes and manipulates.

The RAM 113 serves as temporary storage for programs and scratchpad data that the CPU 111 executes and manipulates at runtime.

The HDD 114 stores executive programs including a location management program of the present invention, which are to be executed by the CPU 111. Also stored in the HDD 114 are a visited location name table that describes visited location names in association with various pieces of address information, and a location management table for managing the location of the mobile terminal 200a.

The interface 115 provides functions of converting data formats and the like to permit the location management server 110a to send and receive data to/from a display terminal 120 and a router 101 on the location management network 100.

The bus 116 interconnects the CPU 111, ROM 112, RAM 113, HDD 114, and interface 115, enabling them to exchange data with each other.

The display terminal 120 and mobile terminal 200a have basically the same hardware configuration as the one illustrated in FIG. 3, and therefore their explanation will be omitted here.

The above-described first embodiment operates as follows.

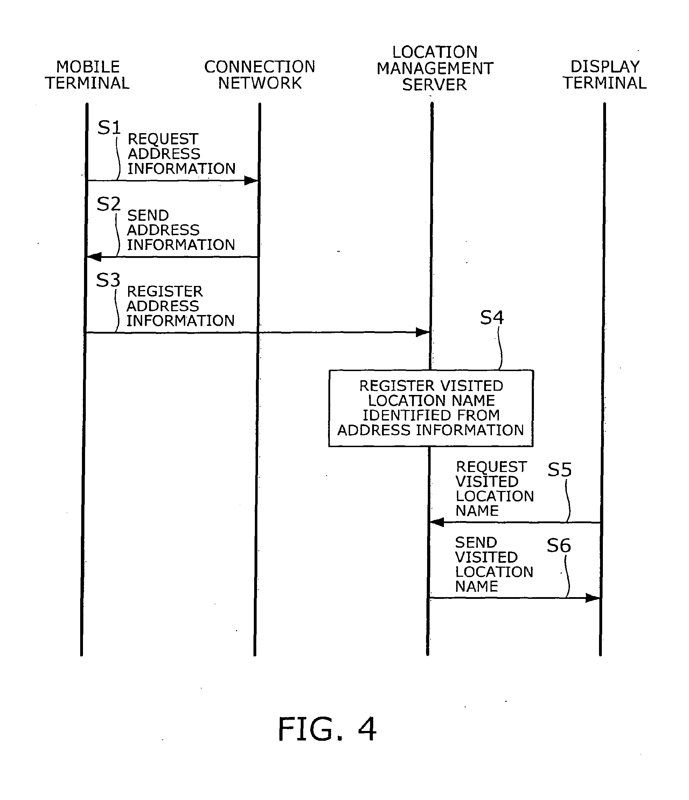

FIG. 4 is a communication sequence diagram showing how the first embodiment works.

The mobile terminal 200a identifies a communication interface that is currently usable and requests an accessible connection network 300, 400, or 500 to provide address information. This request occurs on several occasions including: when the mobile terminal 200a is powered up; when it has moved to a different subnet (e.g., from one connection network 300 to another connection network 400 as depicted in FIG. 2); when it has switched its communications media; and when the user has explicitly requested a connection to a particular network. The requested address information includes a new IP address for the mobile terminal 200a, the default gateway IP address of the visited connection network 300, 400, or 500, and the MAC address of a wireless LAN access point 403a or 403b (S1).

In response to this request from the mobile terminal 200a, the visited connection network 300, 400, or 500 provides address information to the requesting mobile terminal 200a (S2).

Upon receipt of the address information from the connection network 300, 400, or 500, the mobile terminal 200a registers the received information with the location management server 110a on the location management network 100 (S3).

The location management server 110a searches its visited location name table by using the registered address information, thereby identifying a visited location name that indicates to which connection network 300, 400, or 500 the mobile terminal 200a is currently attached.

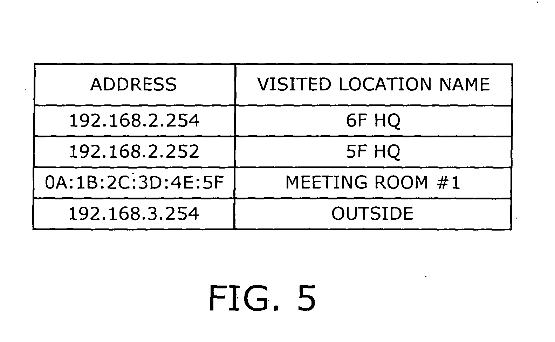

FIG. 5 shows an example of a visited location name table.

As illustrated, the visited location name table stores visited location names associated with address information of different connection networks 300, 400, and 500. More specifically, the table gives a specific location name "6F HQ" in association with a default gateway IP address "192.168.2.254" of one connection network 300, which is located in the sixth floor of the headquarters building. Likewise, it gives another location name "5F HQ" in association with a default gateway IP address "192.168.2.252" of another connection network 400, which is located in the fifth floor of the headquarters building. Yet another location name "MEETING ROOM #1" is associated with MAC address "0A:1B:2C:3D:4E:5F" of the wireless LAN access point 403a in the first meeting room. Still another location name "OUTSIDE" is associated with the default gateway IP address "192.168.3.254" of another connection network 500, which covers an area outside the company.

Suppose now that the mobile terminal 200a has registered, for example, "192.168.2.254" as address information. The location management server 110a then consults the visited location name table with this address value and identifies accordingly that the mobile terminal 200a is currently located in an area with a visited location name of "6F HQ." This visited location name of the mobile terminal 200a is then registered with a location management table.

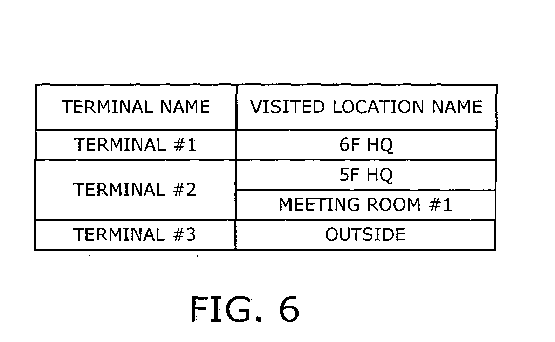

FIG. 6 shows an example of a location management table.

As illustrated, the location management table stores the name of each identified terminal and its visited location name. The example of FIG. 6 shows a case where a plurality of mobile terminals 200a have registered their locations. Specifically, the table indicates that one terminal with a terminal name of "TERMINAL #1" is in a location named "6F HQ." Likewise, it indicates that another terminal "TERMINAL #2" is in "MEETING ROOM #1" of "5F HQ" and that yet another terminal "TERMINAL #3" is in "OUTSIDE." As a mobile terminal roams around, its visited location name changes accordingly, as in the case illustrated in FIG. 2, where the mobile terminal 200a has moved from one connection network 300 to another connection network 400. The location management table of FIG. 6 may record a history of those visited location names (S4).

Subsequently the location management server 110a receives a request for the visited location name of the mobile terminal 200a or its history records from the display terminal 120 (S5). In response to this request, the location management server 110a consults the location management table to find a visited location name of the mobile terminal 200a or its history records and sends the result to the display terminal 120 (S6).

The display terminal 120 then displays the current location of the mobile terminal 200a on, for example, a screen 120a illustrated in FIG. 2.

The following will now describe in detail how the location management server 110a operates.

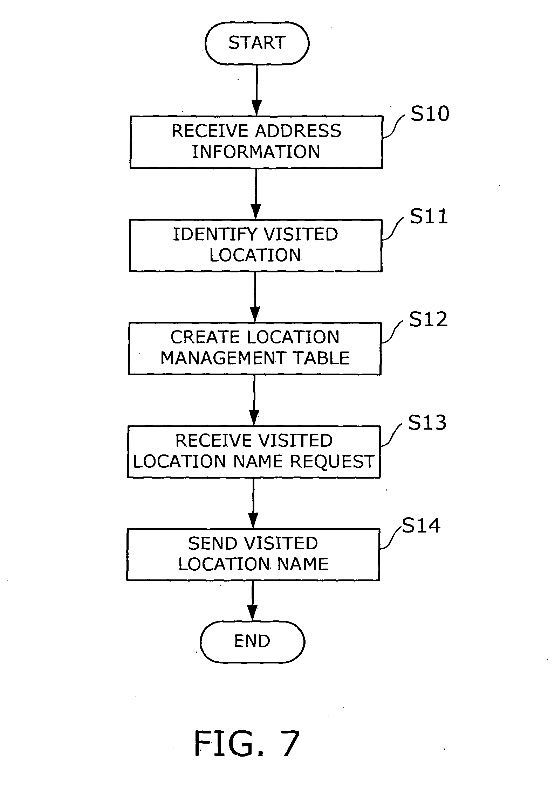

FIG. 7 is a flowchart of a process executed in the location management server.

### S10: Receive Address Information

The interface 115, under the control of the CPU 111 in the location management server 110a, receives address information from a mobile terminal 200a.

### S11: Identify Visited Location

The CPU 111 retrieves a visited location name table (see FIG. 5) from the HDD 114 and finds in it a relevant entry corresponding to the received address information, thereby identifying the visited location name. In other words, it converts the received address information to a visited location name.

### S12: Create Location Management Table

Based on the visited location name converted at step S11, the CPU 111 creates a new location management table like the one shown in FIG. 6 to manage the location of the mobile terminal 200a and stores the created table in the HDD 114. Or, alternatively, the CPU 111 retrieves an existing location management table from the HDD 114 and updates it with a new entry. History records of visited locations, if any, may also be updated at the same time.

### S13: Receive Visited Location Name Request

The interface 115 receives a request for the visited location name or its history records from a display terminal 120.

### S14: Send Visited Location Name

Now that a request for the visited location name or its history records is received at step S13, the CPU 111 retrieves the location management table from the HDD 114 to find the requested information about the mobile terminal 200a and sends the result to the display terminal 120 through the interface 115.

The following will now describe a process executed in the mobile terminal 200a.

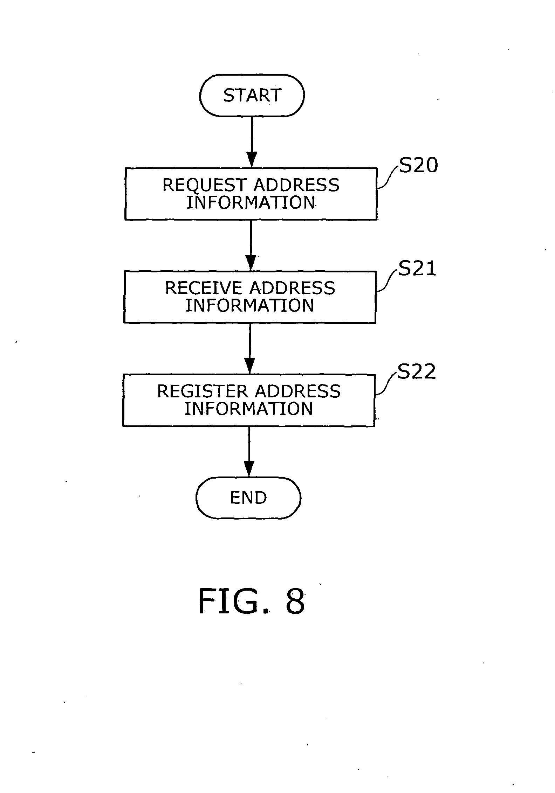

FIG. 8 is a flowchart of a process executed in the mobile terminal.

### S20: Request Address Information

A CPU (not illustrated) disposed in the mobile terminal 200a identifies an interface (now illustrated) that is usable at present and requests a currently accessible connection network 300, 400, or 500 to provide address information. This request occurs on several occasions including: when the mobile terminal 200a is powered up; when it has moved to a different subnet (e.g., from one connection network 300 to another connection network 400 as shown in FIG. 2); when it has switched its communications media; and when the user has explicitly requested a connection to a particular network.

### S21: Receive Address Information

Through the identified interface, the CPU receives address information from the accessible connection network 300, 400, or 500.

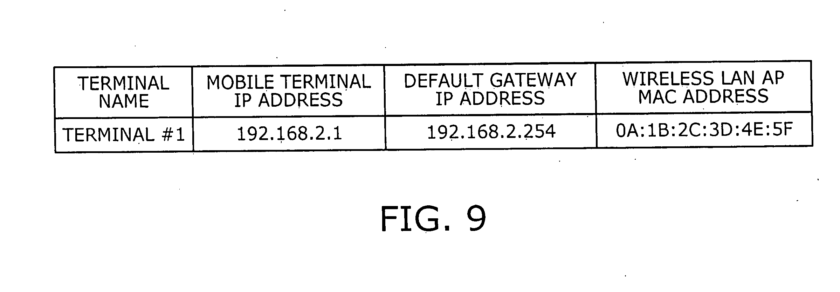

FIG. 9 is an example of a terminal management table managed by a mobile terminal.

In this table, the mobile terminal 200a records its own terminal name, its assigned IP address, IP address of a default gateway in the visited connection network 300, 400, or 500, and MAC address of a wireless LAN access point 403a or 403b, if any.

### S22: Register Address Information

The mobile terminal 200a then registers the received address information with the location management server 110a. More specifically, the mobile terminal 200a actually registers its terminal name, default gateway IP address, and wireless LAN access point MAC address, out of the items shown in the example terminal management table of FIG. 9.

The following will now describe a process executed in the display terminal 120.

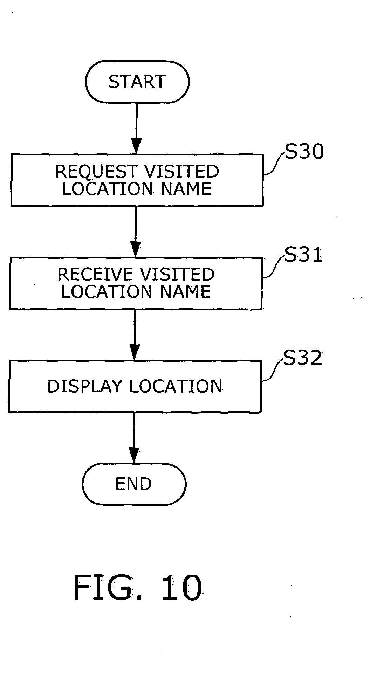

FIG. 10 is a flowchart of a process executed in the display terminal.

### S30: Request Visited Location Name

When it is necessary to obtain the present location (visited location name), or history records thereof, of a particular mobile terminal 200a, a CPU (not illustrated) in the display terminal 120 requests the location management server 110a to provide the information. The user may specify, for example, the name of a mobile terminal 200a in question. This terminal name is then used in inquiring the location of that mobile terminal 200a.

### S31: Receive Visited Location Name

The location management server 110a responds to the request made at step S30 by sending the visited location name or its history records as requested. This response is received by an interface (not illustrated) in the display terminal 120.

### S32: Display Location

Based on the visited location name or its history records that are received, the CPU displays the present location of the mobile terminal 200a on a screen 120a.

As can be seen from the above, the mobile terminal 200a informs the location management server 110a of address information of a particular connection network 300, 400, or 500 to which the mobile terminal 200a is currently attached. Based on this address information, the location management server 110a manages the location of the mobile terminal 200a. When requested from an external entity, the location management server 110a provides information about where the mobile terminal 200a currently is, thus facilitating the requesting entity to locate the mobile terminal 200a in, for example, an enterprise network.

A second embodiment of the present invention will now be described below.

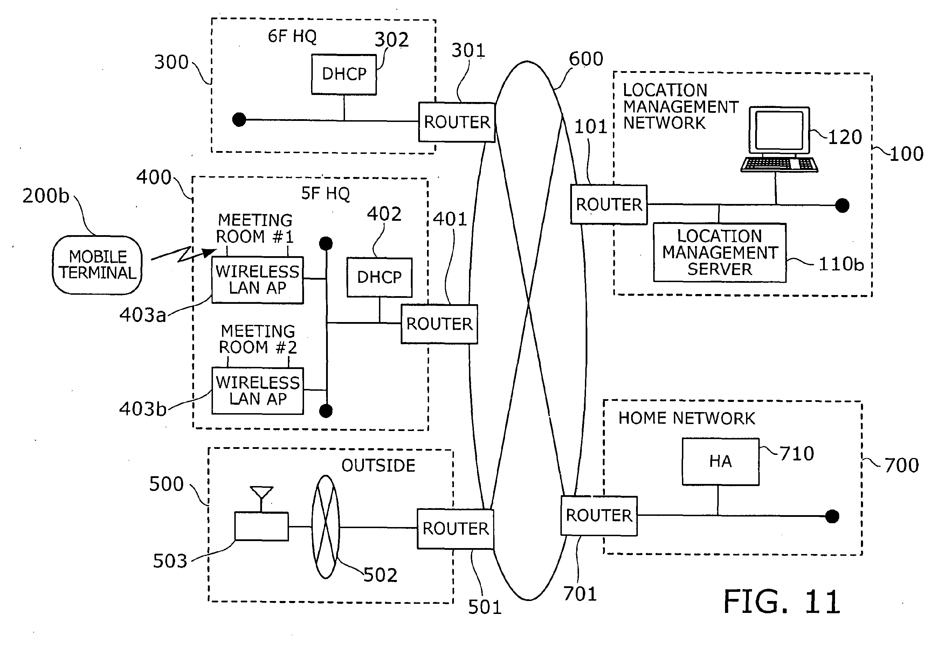

FIG. 11 is a block diagram explaining a second embodiment of the present invention.

Several elements are similar to what have been described as the first embodiment in FIG. 2. Like reference numerals are thus assigned to like elements, and their explanation is omitted.

The configuration of the second embodiment shown in FIG. 11 is different from the first embodiment in that it involves a home network 700. The home network 700 is formed from a home agent 710 (hereafter, "HA") and a router 701 for connection to a wide area network 600.

The HA 710 is a kind of router used in mobile IP environments. The term "mobile IP" refers to a collection of protocols designed for automated management of IP address and delivery of communication packets to a visited network, so as to allow a terminal to roam across different IP networks.

Agent functions are implemented in the HA 710 to transfer addresses between networks. Specifically, for a mobile terminal 200b that roams, the HA 710 manages two addresses called home address and care-of address. The home address is a permanent IP address assigned to the mobile terminal 200b, whereas the care-of address is a temporary IP address assigned to the mobile terminal 200b from its visited connection network 300, 400, or 500.

Unlike the one in the first embodiment, the location management server 110b of the second embodiment sends an address information request to the home address of the mobile terminal 200b in question.

Also unlike the one in the first embodiment, the mobile terminal 200b has a special mobile node function for roaming between networks in a mobile IP environment. This function permits the mobile terminal 200b to register its new care-of address with the HA 710, which knows the home address of the mobile terminal 200b, so that a message from a remote sender can be delivered by using tunneling techniques, without requiring the sender to know whether the recipient has moved or not.

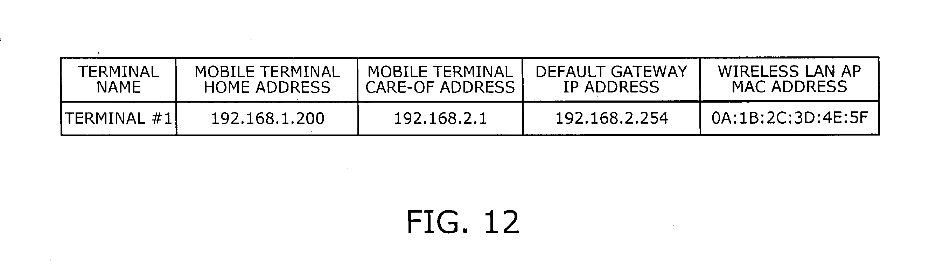

FIG. 12 shows an example of a terminal management table managed by a mobile terminal.

In the illustrated table, the mobile terminal 200b records its own terminal name and home address, a care-of address assigned from the visited connection network 300, 400, or 500, the IP address of a default gateway of that network, and the MAC address of a wireless LAN access point 403a or 403b, if any.

The second embodiment operates as follows.

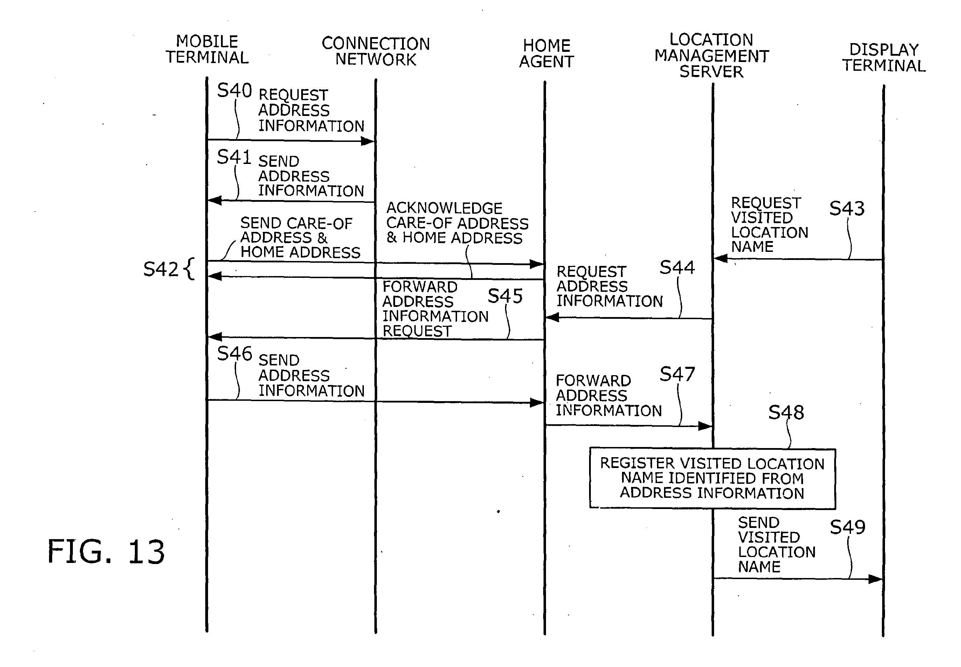

FIG. 13 is a communication sequence diagram showing how the second embodiment works.

The mobile terminal 200b identifies a communication interface that is currently usable and requests an accessible connection network 300, 400, or 500 to provide address information. This request occurs on several occasions including: when the mobile terminal 200b is powered up; when it has moved to a different subnet; when it has switched its communications media; and when the user has explicitly requested a connection to a particular network. The address information includes a care-of address assigned to the mobile terminal 200b, and either the default gateway IP address of the visited connection network 300, 400, or 500 or the MAC address of a wireless LAN access point 403a or 403b (S40).

In response to this request from the mobile terminal 200b, address information is sent from the visited connection network 300, 400, or 500 to the requesting mobile terminal 200b (S41).

Upon receipt of the address information, the mobile terminal 200b informs the HA 710 of its care-of address and home address. The HA 710 then sends an acknowledgment back to the mobile terminal 200b.

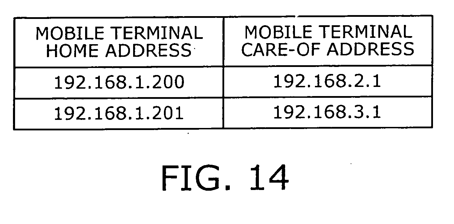

FIG. 14 shows an example of a management table in an HA.

As shown in this diagram, a plurality of home addresses and care-of addresses for different mobile terminals 200b are registered (S42).

Aside from the above sequence, the location management server 110b receives from the display terminal 120 a request for a visited location name, or history records of visited locations, of a mobile terminal 200b having a particular home address (S43). Upon receipt of this request, the location management server 110b requests the HA 710 to provide address information of the specified mobile terminal 200b (S44).

The HA 710 consults the management table of FIG. 14 to obtain a care-of address corresponding to the specified home address of the mobile terminal 200b. Using this care-of address, the HA 710 then forwards the address information request to the mobile terminal 200b (S45). The requested mobile terminal 200b notifies the HA 710 of its own address information (S46).

The HA 710 forwards the received address information to the location management server 110b (S47). With the received address information, the location management server 110b consults the visited location name table of FIG. 5 to identify the visited location name in question and then registers that name with the location management table of FIG. 6 (S48). After that, the location management server 110b sends the visited location name or its history records to the requesting display terminal 120 (S49).

The following will describe in detail the process of a location management program executed in the location management server 110b.

The explanation assumes the hardware configuration shown in FIG. 3 since the location management server 110b has a similar structure to that of FIG. 3.

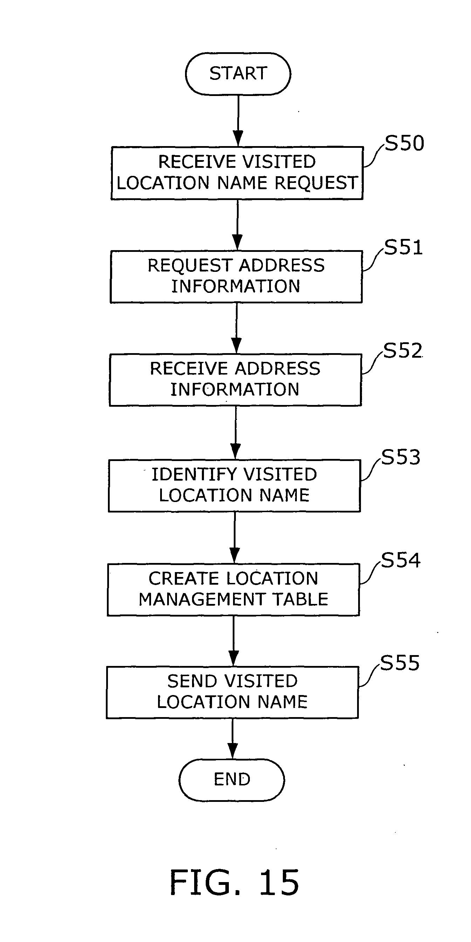

FIG. 15 is a flowchart of a process executed in the location management server.

### S50: Receive Visited Location Name Request

The interface 115 receives from the display terminal 120 a request for a visited location name or its history records of a mobile terminal 200b with a particular home address.

### S51: Request Address Information

Upon receipt of the request, the CPU 111 sends an address information request to the specified home address through the interface 115.

### S52: Receive Address Information

The interface 115 receives address information that is delivered from the mobile terminal 200b via the HA 710.

### S53: Identify Visited Location Name

The CPU 111 retrieves a visited location name table (see FIG. 5) from the HDD 114 and finds an entry corresponding to the received address information, thereby identifying the visited location name of the mobile terminal 200b. In other words, it converts the received address information to a visited location name.

### S54: Create Location Management Table

Based on the visited location name converted at step S52, the CPU 111 creates a location management table similar to the one shown in FIG. 6 to manage the location of the specified mobile terminal 200b and stores the resulting table in the HDD 114. Or, alternatively, the CPU 111 retrieves an existing location management table from the HDD 114 and updates it with a new entry. History records of visited locations, if any, may also be updated at the same time.

### S55: Send Visited Location Name

The CPU 111 retrieves the location management table from the HDD 114 to find the requested information (i.e., the visited location name of the mobile terminal 200b or its history records) and sends the result to the requesting display terminal 120 through the interface 115.

The following will describe how the mobile terminal 200b works.

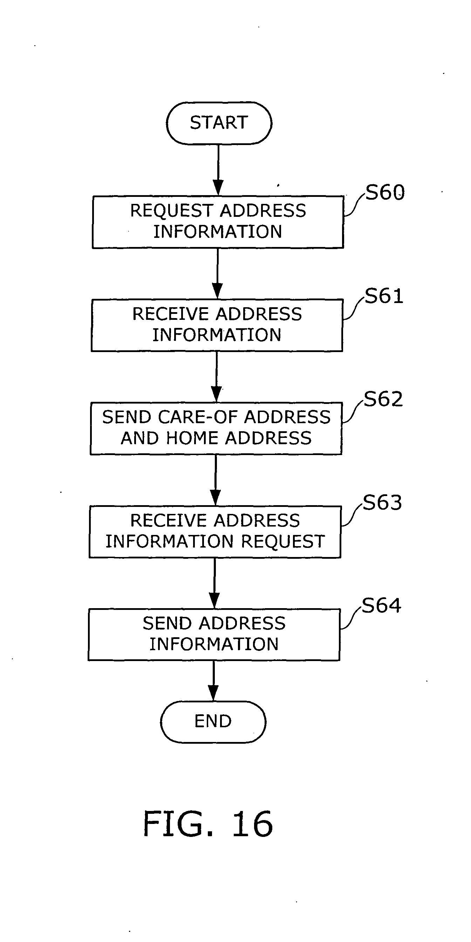

FIG. 16 is a flowchart of a process executed in the mobile terminal.

### S60: Request Address Information

A CPU (not illustrated) disposed in the mobile terminal 200b identifies an interface (now illustrated) that is usable at present and requests a currently accessible connection network 300, 400, or 500 to provide address information. This request occurs on several occasions including: when the mobile terminal 200b is powered up; when it has moved to a different subnet; when it has switched its communications media; and when the user has explicitly requested a connection to a particular network.

### S61: Receive Address Information

Through the identified interface, the CPU receives address information from the accessible connection network 300, 400, or 500.

### S62: Send Care-of Address and Home Address

Through the same interface, the CPU informs the HA 710 of its own home address, together with a care-of address that has been assigned from the accessible connection network 300, 400, or 500.

### S63: Receive Address Information Request

The interface receives an address information request that is originated from the location management server 110b and delivered via the HA 710.

### S64: Send Address Information

Upon receipt of the address information request, the CPU sends the HA 710 the address information received from the accessible connection network 300, 400, or 500 at step 61.

The following will describe a process executed in the HA 710.

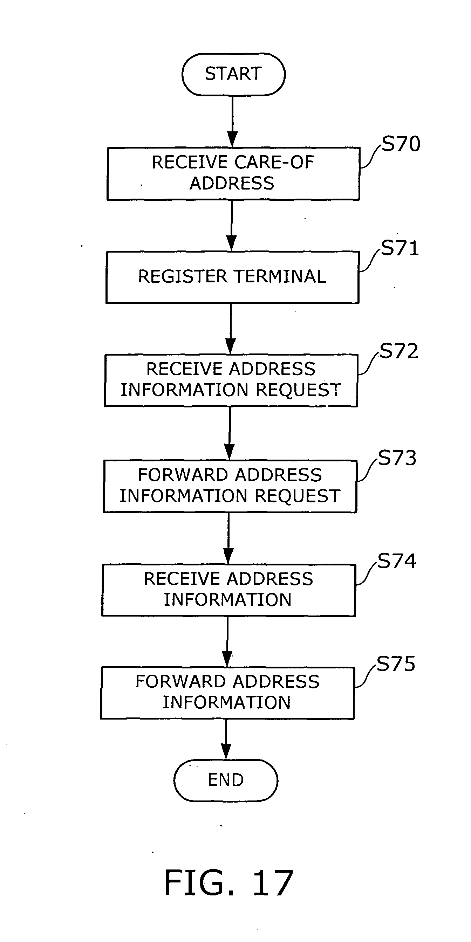

FIG. 17 is a flowchart of a process executed in the home agent.

### S70: Receive Care-of Address

The HA 710 receives a care-of address from a mobile terminal 200b with a certain home address.

### S71: Register Terminal

Upon receipt of this care-of address, the HA 710 creates a management table similar to the one shown in FIG. 14 to record the received care-of address in association with the home address of the mobile terminal 200b, thereby registering the mobile terminal 200b. Or, alternatively, the HA 710 updates an existing table entry of the mobile terminal 200b with its new care-of address.

### S72: Receive Address Information Request

The HA 710 receives an address information request issued by the location management server 110b.

### S73: Forward Address Information Request

The HA 710 forwards the address information request received at step S72 to the care-of address of the mobile terminal 200b registered at step S71.

### S74: Receive Address Information

Address information arrives from the mobile terminal 200b.

### S75: Forward Address Information

The HA 710 forwards the received address data to the requesting location management server 110b.

As can be seen from the above explanation, the second embodiment provides an HA 710 as an intermediary mechanism for receiving and forwarding an address information request and address information between the location management server 110b and mobile terminals 200b. Rather than updating the location with new address information each time a mobile terminal 200b roams across connection networks 300, 400, and 500, the location management server 110b commands the mobile terminal 200b to provide its address information only when the location of that mobile terminal 200b is requested by a display terminal 120. A server-driven system can be realized in this way.

The above-described processing functions are actually implemented on a computer system. Specifically, the functions of the location management server 110a and 110b, display terminal 120, and mobile terminals 200a and 200b are encoded and provided in the form of computer programs. By executing those programs, a computer provides the intended functions described above. The program instructions are stored in a computer-readable medium for the purpose of storage. Typical computer-readable storage media include magnetic storage media, optical discs, magneto-optical storage media, and solid state memory devices. Magnetic storage media include hard disk drives (HDD), flexible disks (FD), and magnetic tapes. Optical discs include digital versatile discs (DVD), DVD random-access memory (RAM), compact disc read-only memory (CD-ROM), CD-Recordable (CD-R), and CD-Rewritable (CD-RW). Magneto-optical storage media include magneto-optical discs (MO).

Portable storage media, such as DVD and CD-ROM, are suitable for the distribution of program products. Network-based distribution of software programs is also possible, in which master program files are made available in a server computer for downloading to other computers via a network.

A user computer stores necessary programs in its local storage unit, which have previously been installed from a portable storage media or downloaded from a server computer. The computer executes the programs read out of the local storage unit, thereby performing the programmed functions. As an alternative way of program execution, the computer may execute programs, reading out instruction codes directly from a portable storage medium. Another alternative method is that the user computer dynamically downloads programs from a server computer when they are demanded and executes them upon delivery.

While the above description has assumed three connection networks 300, 400, and 500, it is needless to say that the present invention is not limited to that particular number of networks. In addition, the present invention is applicable to the management not only of a single mobile terminal 200a or 200b, but also of a plurality of similar mobile terminals.

The above discussion is summarized as follows. According to the present invention, a mobile terminal sends address information of its visited network, enabling creation of a visited location table that associates address information with visited location names. This table is used together with given address information so as to compile a location management table for facilitating the management of locations of mobile terminals. When some other computer on a network needs to know the location of a specific mobile terminal, the server can easily inform the requesting computer of the visited location name of that mobile terminal, by consulting the location management table according to the received location data request.

The present invention also enables management and delivery of history records about the location of a mobile terminal.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

## Claims

1. A location management program for managing the location of a data terminal device, the program causing a computer to function as:
reception means for receiving, from the data terminal device, address information of a connection network that the data terminal device is currently visiting;
location identification means for identifying a visited location name of the data terminal device with reference to the received address information and a visited location name table that stores the address information in association with the visited location name; and
notification means, responsive to a location data request asking for the location of the data terminal device, for sending the visited location name identified by said location identification means.

2. The location management program according to claim 1, wherein the address information is an IP address of a default gateway belonging to the visited connection network, or a MAC address of a wireless LAN access point.

3. The location management program according to claim 1, wherein:
the location management program comprises location management table creation means for creating a location management table for managing the location of the data terminal device, based on the identified visited location name;
the location management table contains history records of visited location names of the data terminal device; and
said notification means sends the history records in response to the location data request.

4. A location management program for managing the location of a data terminal device, the program causing a computer to function as:
first reception means for receiving a location data request asking for the location of the data terminal device;
address information requesting means for requesting a home agent managing home address of the data terminal device to provide address information of a connection network that the data terminal device is currently visiting;
second reception means for receiving the address information from the home agent;
location identification means for identifying a visited location name of the data terminal device with reference to the received address information and a visited location name table that stores the address information in association with the visited location name; and
notification means, responsive to a location data request asking for the location of the data terminal device, for sending the visited location name identified by said location identification means.

5. The location management program according to claim 4, wherein the address information is an IP address of a default gateway belonging to the visited connection network, or a MAC address of a wireless LAN access point.

6. The location management program according to claim 4, wherein:
the location management program comprises location management table creation means for creating a location management table for managing the location of the data terminal device, based on the identified visited location name;
the location management table contains history records of visited location names of the data terminal device; and
said notification means sends the history records in response to the location data request.

7. A computer program for use with a computer to send and receive information over a network, the computer program causing a computer to function as:
address information requesting means for requesting a currently visited connection network to provide address information thereof;
address information reception means for receiving the address information; and
notification means for sending the address information to another computer.

8. A computer program for use with a computer to send and receive information over a network, the computer program causing a computer to function as:
address information requesting means for requesting a currently visited connection network to provide address information thereof;
address information reception means for receiving the address information;
first notification means for sending a care-of address and home address of the computer itself to a home agent;
address information request reception means for receiving from the home agent an address information request asking for the address information; and
second notification means for sending the address information to the home agent in response to the address information request.

9. A computer-readable storage medium storing a program for a computer to manage the location of a data terminal device, the program causing the computer to function as:
reception means for receiving, from the data terminal device, address information of a connection network that the data terminal device is currently visiting;
location identification means for identifying a visited location name of the data terminal device with reference to the received address information and a visited location name table that stores the address information in association with the visited location name; and
notification means, responsive to a location data request asking for the location of the data terminal device, for sending the visited location name identified by said location identification means.

10. A computer-readable storage medium storing a program for a computer to manage the location of a data terminal device, the program causing the computer to function as:
first reception means for receiving a location data request asking for the location of the data terminal device;
address information requesting means for requesting a home agent managing home address of the data terminal device to provide address information of a connection network that the data terminal device is currently visiting;
second reception means for receiving the address information from the home agent;
location identification means for identifying a visited location name of the data terminal device with reference to the received address information and a visited location name table that stores the address information in association with the visited location name; and
notification means, responsive to a location data request asking for the location of the data terminal device, for sending the visited location name identified by said location identification means.

11. A computer-readable storage medium storing a program for a computer to send and receive information over a network, the program causing the computer to function as:
address information requesting means for requesting a currently visited connection network to provide address information thereof;
address information reception means for receiving the address information; and
notification means for sending the address information to another computer.

12. A computer-readable storage medium storing a program for a computer to send and receive information over a network, the program causing the computer to function as:
address information requesting means for requesting a currently visited connection network to provide address information thereof;
address information reception means for receiving the address information; and
first notification means for sending a care-of address and home address of the computer to a home agent;
address information request reception means for receiving from the home agent an address information request asking for the address information; and
second notification means for sending the address information to the home agent in response to the address information request.
